# EUROPÄISCHE PATENTANMELDUNG

(11) **EP 2 073 360 A2**
(43) Veröffentlichungstag der Anmeldung: **24.06.2009**
(21) Anmeldenummer: 08021857.1
(22) Anmeldetag: 17.12.2008
(51) Int. Cl.: H02K 11/00

(54) **Hohlwellenmotor**

(30) Priorität: 22.12.2007 DE 102007062381
(71) Anmelder: Robert Bosch GmbH, 70469 Stuttgart (DE)
(72) Erfinder: Gröning, Ingolf, 97816 Lohr am Main (DE); Steinbock, Stefan, 97857 Urspringen (DE)
(74) Vertreter: Thürer, Andreas

(57) **Zusammenfassung**

Die Aufgabe der Erfindung liegt in der Realisierung eines möglichst kompakten Hohlwellenmotors, insbesondere in Verbindung mit Spritzgießmaschinen.

Die Aufgabe wird gelöst mittels eines Hohlwellenmotors mit Geber 3, wobei zwischen Geber 3 und Hohlwellenrotor 1 ein Getriebe 2,3b vorgesehen ist und wobei das Getriebe 2,3b Verbindungsmittel 2,3b umfasst, welche derart miteinander korrespondieren, dass der Rotor 3b der Signalerzeugungsvorrichtung mittels des Hohlwellenrotors 1 antreibbar ist.

Aus der erfindungsgemäßen Lösung resultiert ein schmal bauender wartungsarmer Motor, bei dem auch bei Verwendung eines niedrig auflösenden Gebers 3 noch eine präzise Lageregelung möglich ist.

## Beschreibung

Die Erfindung betrifft einen Hohlwellenmotor, insbesondere zum Antrieb einer Maschine, insbesondere einer Spritzgießmaschine, mit Hohlwellenrotor und mit Signalerzeugungsvorrichtung gemäß dem unabhängigen Anspruch 1.

Aus dem Stand der Technik sind Hohlwellenmotoren bekannt. Bei diesen Hohlwellenmotoren handelt es sich um Elektromotoren, deren Rotor als Hohlwelle ausgebildet ist. Eine solche Hohlwelle hat einen Wellenabschnitt mit einem vorgegebenen Innendurchmesser und einem vorgegebenen Außendurchmesser. In der Offenlegungsschrift DE 10 2006 037 804 ist ein solcher Elektromotor mit Hohlwelle gezeigt. Zur Regelung der Motordrehzahl besteht die Möglichkeit, die Hohlwelle mit einem Hohlwellengeber auszustatten, welcher einem angeschlossenen Steuergerät beispielsweise Drehzahlinformationen oder Lageinformationen bezüglich der Hohlwelle liefern kann. Derartige Hohlwellengeber werden in geringeren Stückzahlen hergestellt als standardmäßige Inkrementalgeber, wie sie beispielsweise in Verbindung mit massiven Rotoren eingesetzt werden. Bei Verwendung eines preisgünstigeren Gebers in Verbindung mit einer Hohlwelle könnten somit Kosten eingespart werden. Allerdings können diese preiswerten Geber prinzipbedingt nicht ohne weiteres an einer Hohlwelle angeschlossen werden.

Die Kombination aus Hohlwelle und standardmäßigem Inkrementalgeber ist beispielsweise in Verbindung mit Spritzgussmaschinen ein Thema. Zur Ankopplung des Gebers an die Hohlwelle werden Riemenantriebe verwendet. Zwischen der Hohlwelle und dem Geber wird daher nach dem Prinzip eines Keilriemens die Drehzahl der Hohlwelle auf den Rotor des Gebers übertragen. Riemenantriebe weisen prinzipbedingt mehrere Nachteile auf. Als erster Nachteil ist zu nennen, dass alle Riemen kritische Frequenzen bzw. Drehzahlen aufweisen, bei denen sie zu schwingen beginnen. Diese Schwingungen können sich auch auf die Haltbarkeit der Lager des Gebers auswirken und zu frühzeitigem Verschleiß führen. Ein weiterer Nachteil von Riemenantrieben besteht darin, dass das Riemenmaterial einem Alterungsprozess unterworfen ist, welcher zu Rissbildungen, Längendehnungen und zu einer Reduzierung der Materialflexibilität führen kann. Die Genauigkeit des vom Geber gelieferten Signals an die Steuerung reduziert sich daher mit zunehmender Lebensdauer der Anlage. Ein dritter Nachteil der Riemenantriebe besteht darin, dass diese prinzipbedingt mit einer definierten Riemenvorspannung zwischen Rotor und Hohlwelle angeordnet werden müssen. Diese Riemenvorspannung gewährleistet den zunächst sicheren Betrieb. Andererseits wirkt sich diese Riemenvorspannung jedoch ebenfalls negativ auf die Lager aus und belastet diese zusätzlich. Auch dies kann zu vorzeitigem Verschleiß der Lager führen, was wiederum einen Ausfall der Gesamtanordnung zur Folge haben kann.

Die Aufgabe der Erfindung besteht nun darin eine möglichst preiswerte Lösung zur Regelung eines Hohlwellenmotors zu realisieren, welche auch nach längerer Betriebsdauer noch zuverlässig und präzise arbeitet.

Diese Aufgabe wird gelöst mittels eines Hohlwellenmotors, insbesondere zum Antrieb einer Maschine, insbesondere einer Spritzgießmaschine, mit Hohlwellenrotor und mit einer Signalerzeugungsvorrichtung, welche ebenfalls einen Rotor umfasst, wobei zusätzlich ein Getriebe umfasst ist. Das Getriebe ist mittels eines ersten am äußeren Umfang des Hohlwellenrotors realisierten Verbindungsmittels und mittels eines zweiten am Rotor der Signalerzeugungsvorrichtung realisierten Verbindungsmittels realisiert, wobei beide Verbindungsmittel derart unmittelbar miteinander korrespondieren, dass der Rotor der Signalerzeugungsvorrichtung mittels des Hohlwellenrotors antreibbar ist.

Die Verbindung erfolgt demgemäß nicht mehr mittels eines Riemens, sondern mittels zueinander korrespondierender Verbindungsmittel, welche eine unmittelbare Kopplung zwischen Geber und Hohlwelle ermöglichen. Der Vorteil der Anordnung liegt darin, dass nun der im Vergleich mit Standardgebern relativ teuere Hohlwellengeber eingespart werden kann. Aufgrund der Erfindung können nun preiswerte Standardgeber ohne Einbußen bezüglich der Lebensdauer und Betriebssicherheit der Gesamtvorrichtung eingesetzt werden, wobei die Anbindung des Standardgebers an die Hohlwelle derart realisiert ist, dass die aus dem Stand der Technik bereits bekannten Nachteile eliminiert werden.

Die Hohlwelle als solche bleibt ohne größere Modifikationen erhalten und liefert nach wie vor die für Hohlwellen bekannten Vorteile, beispielsweise in Verbindung mit der Realisierung von Kugelgewindetrieben, wo zum Beispiel eine Gewindestange innerhalb der Hohlwelle angeordnet sein kann, welche aufgrund der Drehung der Hohlwelle eine lineare Bewegung ausführt.

Besonders bevorzugt handelt es sich bei den Verbindungsmitteln um Zahnräder, wobei ein Zahnradring am äußeren Umfang des Hohlwellenmotors realisiert ist und ein korrespondierendes Zahnrad am äußeren Umfang des Rotors der Signalerzeugungsvorrichtung realisiert ist, wobei die Zahnräder derart ausgebildet sind, dass sie formschlüssig ineinander greifen. Es sei hier vorsorglich noch darauf hingewiesen, dass der Zahnradring am äußeren Umfang des Hohlwellenrotors keineswegs ein vom Hohlwellenrotor separates Bauteil sein muss. Der Zahnradring kann vielmehr zusammen mit dem Hohlwellenrotor ein einteiliges Bauteil bilden, indem er bereits bei der Herstellung des Hohlwellenrotors am Hohlwellenrotor vorgesehen wird. Die Ankopplung des Gebers erfolgt somit direkt und ohne Umwege mit dem Rotor der Signalerzeugungsvorrichtung mittels der Zahnräder. Die formschlüssige Anbindung kann derart erfolgen, dass die Anordnung weitestgehend spielfrei realisierbar ist. Zusätzlich ist aufgrund der Verwendung des Zahnrades und der damit verbundenen ineinander greifenden Zähne eine sichere und robuste Verbindung gewährleistet.

Alternativ zum Zahnrad kann es sich bei den Verbindungsmitteln um Räder handeln, wobei ein erstes ringförmiges Rad am äußeren Umfang des Hohlwellenmotors realisiert ist und ein zweites Rad am äußeren Umfang des Rotors der Signalerzeugungsvorrichtung realisiert ist, wobei die Räder derart ausgebildet sind, dass sie reibschlüssig aneinander liegen (z.B. gummierte Oberfläche). Auch diese Art der Anbindung zwischen Geber und Hohlwelle lässt sich preiswert realisieren. Auch eine Kombination aus reibschlüssiger und formschlüssiger Anbindung wäre denkbar, beispielsweise durch miteinander korrespondierende Erhebungen und Ausnehmungen gekennzeichnete Oberflächen, beispielsweise nach Art eines Zahnriemens. Auch für diese alternative Lösung gilt die zuvor gemachte Aussage, dass Hohlwelle und Verbindungsmittel sowohl einteilig als auch mehrteilig realisiert sein können.

Besonders bevorzugt erstreckt sich das erste und/oder das zweite Verbindungsmittel derart axial entlang des Hohlwellenrotors, dass auch bei axialer Verschiebung der Hohlwelle oder der Signalerzeugungsvorrichtung ein Antrieb des Rotors der Signalerzeugungsvorrichtung gewährleistet ist. Gerade in Verbindung mit Spritzgießmaschinen oder bei der Realisierung von Linearantrieben mittels Hohlwellenmotoren wirken auf die Lager und auf die Welle des Hohlwellenmotors nicht nur Kräfte in radialer, sondern auch Kräfte in Längsrichtung der Welle. Die Wellen sind in der Regel mittels Loslagern gelagert und können diese Längsbewegungen daher bis zu einem gewissen Grade ausgleichen. Damit nun die erfindungsgemäße Anbindung des Gebers an die Hohlwelle auch bei derartigen Längsbewegungen nach wie vor zuverlässig arbeitet, erstreckt sich zumindest ein Verbindungsmittel vorzugsweise in axialer Richtung der Welle, so dass die Verbindung auch bei Längsbewegungen der Welle bestehen bleibt.

Vorzugsweise wird die Signalerzeugungsvornchtung mittels eines Trägers am Motorgehäuse angeordnet. Dieser Träger kann so realisiert sein, dass er eine steife Ankopplung und/oder eine federnde Ankopplung der Signalerzeugungsvorrichtung an das Motorgehäuse ermöglicht. Durch eine solche Ankopplung lassen sich Schwingungen ausgleichen oder Rundlauffehler korrigieren.

Vorteilhafterweise sind die Verbindungsmittel aus Kunststoff bzw. Plastik und/oder Metall hergestellt, wobei vorzugsweise folgende Materialkombinationen für das erste bzw. zweite Verbindungsmittel realisiert sind: Bronze-Stahl oder Messing-Stahl oder Plastik-Stahl oder Stahl-Bronze oder Stahl-Messing oder Metall-Plastik. Diese Materialkombinationen bewirken eine Reduzierung des Verschleißes und haben eine schmierende Wirkung, was die Lebensdauer der Anordnung erhöht.

Ganz besonders bevorzugt handelt es sich bei der Signalerzeugungsvorrichtung um einen standardmäßigen Inkrementalgeber, welcher eine Auflösung um 256 Impulsen pro Umdrehung aufweist. Bei diesen Drehgebern handelt es sich um Massenprodukte, welche in großen Stückzahlen hergestellt werden und daher sehr preiswert sind. Im Vergleich zu beispielsweise Hohlwellengebern, welche in wesentlich geringeren Stückzahlen produziert werden, kann man durch Verwendung solcher preiswerter Geber erhebliche Wettbewerbsvorteile erzielen. Die erfindungsgemäße Anbindung führt in Verbindung mit diesen Gebern zu einer Lösung, welche bezüglich der Signalgüte mit Hohlwellengebern vergleichbar ist, jedoch bezüglich der Kosten erheblich attraktiver ist.

Vorzugsweise wird die erfindungsgemäße Lösung derart realisiert, dass die Auflösung des standardmäßigen Inkrementalgebers bei Betrieb der Anordnung um den Faktor d1/d2 erhöht wird, wobei d1 im wesentlichen dem Außendurchmesser des ersten Verbindungsmittels und d2 im wesentlichen dem Außendurchmesser des zweiten Verbindungsmittels entspricht. Das Verhältnis d1 zu d2 entspricht gleichzeitig der Getriebeübersetzung. Da dieses Getriebe zwischen Geber und Hohlwelle angeordnet ist, führt die Getriebeübersetzung automatisch zu einer höheren Auflösung des Gebers, weil pro Umdrehung der Hohlwelle eine zum Übersetzungsverhältnis proportionale Anzahl von Signalen erzeugt wird. Diese höhere Auflösung errechnet sich aus der Anzahl der Impulse pro Umdrehung des Standardgebers multipliziert mit dem Verhältnis d1 zu d2 (Getriebeübersetzung). Die Verwendung von Gebern mit relativ niedriger Auflösung stellt also in Verbindung mit der erfindungsgemäßen Lösung keinen Nachteil dar, weil diese relativ niedrigere Auflösung aufgrund des erfindungsgemäßen Prinzips wieder kompensiert wird. Ohne deutliche Mehrkosten erhält man damit ein System mit ausreichender Auflösung, obgleich ein Standardgeber mit eigentlich sehr geringer Auflösung verwendet wird.

Die erfindungsgemäße Anordnung wird mit einem Regelgerät betrieben, so dass eine Antriebseinrichtung mit erfindungsgemäßem Hohlwellenmotor und einem Regelgerät mit Firmware resultiert, wobei vorzugsweise die Anordnung derart konzipiert ist, dass das Ergebnis der Division d1/d2 Zahl eine ganze Zahl ergibt. Es kann dann in der Firmware des Regelgerätes eine einfache und sichere Umrechnung des Gebersignals auf die Rotorposition erfolgen.

Besonders vorteilhaft ist es eine Maschine, insbesondere eine Spritzgießmaschine, mit einem erfindungsgemäßen Hohlwellenmotor auszustatten, wobei die Signalerzeugungsvorrichtung an der Hohlwelle des Hohlwellenmotors angeordnet ist. Die Erfindung gewährleistet eine sichere und zuverlässigen Drehzahlregelung für die Maschine.

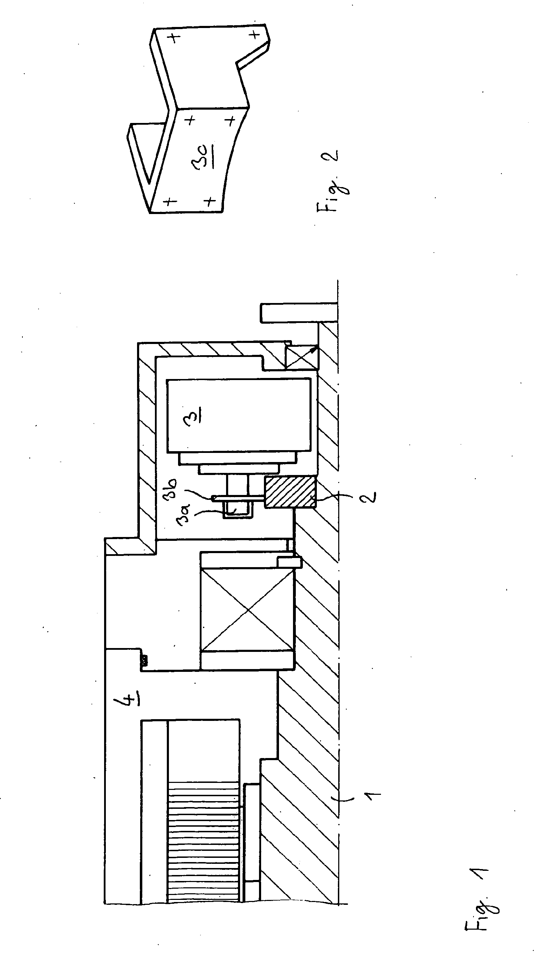

Die erfindungsgemäße Lösung wird anhand der folgenden Detailzeichnungen näher erläutert. In Figur 1 ist die Ankopplung zwischen Geber 3 und Hohlwelle 1 mittels eines Getriebes 2,3b näher gezeigt. In Figur 2 ist das Halteelement 3c für den Geber perspektivisch gezeigt.

Figur 1 zeigt einen Ausschnitt aus einem Hohlwellenmotorlängsschnitt. Es ist insbesondere gezeigt der Hohlwellenrotor 1 mit einem ersten Verbindungsmittel 2. Hohlwellenrotor 1 und Verbindungsmittel 2 können sowohl einstückig als auch zweistückig oder mehrstückig realisiert sein. Weiter ist zu sehen die Signal erzeugungsvorrichtung 3, beispielsweise in Form eines Drehzahlgebers, Pollagegebers oder Winkelgebers. Die Signalerzeugungsvorrichtung 3 umfasst einen Rotor 3A, an dem ein Verbindungsmittel 3B angeordnet ist. Beide Verbindungsmittel 2 und 3B sind derart realisiert, dass sie miteinander korrespondieren (beispielsweise ein formschlüssiges ineinandergreifen), so dass der Rotor 3A des Signalerzeugungsvornchtung 3 mittels der Hohlwelle 1 antreibbar wird. Hohlwelle 1, Verbindungsmittel 2 und Verbindungsmittel 3B sowie Signalerzeugungsmittel 3 sind innerhalb eines Motorgehäuses 4 angeordnet. Bei der hier gezeigten Lösung wurde zur Realisierung der Verbindungsmittel 2, 3b ein Zahnradring 2 verwendet, welcher am äußeren Umfang der Hohlwelle 1 im Rahmen der Herstellung der Hohlwelle bereits realisiert wurde (bspw. mittels Fräsvorgängen am Hohlwellenmaterial) oder als separates Teil nachträglich angeordnet wurde. Außerdem wurde auf dem Rotor 3A der Signalerzeugungsvorrichtung 3 ein Zahnrad 3B angeordnet, welches am äußeren Umfang des Zahnradringes 2 der Hohlwelle 1 abschnittsweise unmittelbar eingreift. Wie aus Figur 1 ersichtlich erstreckt sich der Zahnradring 2 über eine bestimmte Länge entlang der Längsachse der Hohlwelle, wohingegen das Zahnrad 3B an der Signalerzeugungsvorrichtung 3 relativ zur Breite des Zahnringes 2 sehr schmal realisiert ist. Bewegt sich nun die Welle 1 oder die Signalerzeugungsvorrichtung 3 in axialer Richtung (beispielsweise verursacht durch Vibrationen oder axial wirkende Kräfte), so bewirkt die Verbreiterung des Zahnradringes 2, dass trotz dieser Axialbewegung das ineinander greifen beider Zahnräder 2 und 3B stets gewährleistet ist. Selbstverständlich könnte auch die Materialstärke des Zahnrades 3B breiter als die Breite des Ringes 2 realisiert sein oder die Zahnradbreite und die Ringbreite könnten eine bestimmte Mindestbreite aufweisen, welche auch bei Axialbewegungen innerhalb der zulässigen Toleranzbereiche eine stabile Verbindung stets gewährleistet. Das Zahnrad 3B könnte in diesem Beispiel aus Bronze realisiert sein, wohingegen das Zahnradring 2 in diesem Falle dann aus Stahl realisiert sein sollte. Weitere denkbare Materialkombinationen können der Beschreibung weiter oben entnommen werden. Auch in dieser Beschreibung nicht explizit erwähnte, jedoch aus dem Stand der Technik bekannte Materialkombinationen, welche dieselbe Wirkung, wie die beschriebenen Materialkombinationen aufweisen (schmierende Wirkung), sind zur erfindungsgemäßen Verwendung geeignet. Bei dem Signalerzeugungsmittel 3 bzw. Drehzahlgeber 3 handelt es sich in diesem konkreten Beispiel um einen einfachen standardmäßigen Inkrementalgeber, welcher eine Auflösung von bis zu 256 Impulsen pro Umdrehung oder mehr aufweisen kann. Höhere Auflösungen sind selbstverständlich auch möglich, jedoch aufgrund des zuvor schon mehrfach erläuterten erfindungsgemäßen Effektes weder erforderlich, noch gewünscht (Kosten). Auch wäre der Einsatz von Absolutwertgebem und dergleichen denkbar.

Die Signalerzeugungsvorrichtung 3, welche in Figur 1 gezeigt wurde, muss am Motorgehäuse 4 befestigt werden. Zur Realisierung einer solchen Befestigung dient das in Figur 2 gezeigte Haltemittel 3C. Dieses Haltemittel 3C hat eine Trägerfunktion für die Signalerzeugungsvorrichtung 3. Das Haltemittel 3C kann so realisiert sein, dass entweder eine steife und/oder federnde Ankopplung der Signalerzeugungsvorrichtung 3 an das Gehäuse 4 realisierbar ist. Aufgrund dieser Ankopplung können im Betrieb auftretende Störgrößen (u.a. Vibrationen) leicht und selbsttätig von der Vorrichtung eliminiert werden. Beispielsweise kann eine federnde Ankopplung im Betrieb plötzlich auftretenden Schwingungen vorbeugen. Auch können Rundlauffehler der (Zahn)-Räder ausgeglichen werden. Das Trägerelement 3C umfasst diverse Bohrungen (gekennzeichnet durch die in Figur 2 eingezeichneten Kreuze), mittels derer es auf unterschiedlichste Art und Weise zwischen Gehäuse 4 und Signalerzeugungsvorrichtung 3 (siehe Figur 1) angeordnet werden kann.

Alles in allem bietet die Erfindung den Vorteil einer schmal bauenden preiswerten Spezialantriebslösung, insbesondere für Spritzgießmaschinen, da kein Riemenantrieb mehr erforderlich ist. Zusätzlich können preiswerte Standardgeber mit geringer Auflösung eingesetzt werden, ohne dass Einbußen bzgl. der mittels der Standardgeber realisierten Funktionen (Kommutierung, etc.) erforderlich sind. Die verwendeten Materialkombinationen liefern eine langlebige erfindungsgemäße Vorrichtung. Der Geber kann aufgrund des verwendeten Trägerelementes einfach ausgetauscht werden und die im Betrieb auftretenden Schwingungen können aufgrund der erfindungsgemäßen Konstruktion leicht kompensiert oder sogar vermieden werden.

## Patentansprüche

1. Hohlwellenmotor, insbesondere zum Antrieb einer Maschine, insbesondere einer Spritzgießmaschine, mit Hohlwellenrotor (1) und mit Signalerzeugungsvorrichtung (3), welche einen Rotor (3a) umfasst und mit Getriebe (2,3b) sowie mit Motorgehäuse (4),
**dadurch gekennzeichnet, dass** das Getriebe (2,3b) mittels eines ersten am äußeren Umfang des Hohlwellerotors (1) realisierten Verbindungsmittels (2) und mittels eines zweiten am Rotor (3a) der Signalerzeugungsvorrichtung (3) realisierten Verbindungsmittels (3b) gebildet ist, wobei beide Verbindungsmittel (2,3b) derart miteinander korrespondieren, dass der Rotor (3a) der Signalerzeugungsvorrichtung (3) mittels des Hohlwellenrotors (1) antreibbar ist.

2. Hohlwellenmotor nach Anspruch 1, wobei die Verbindungsmittel (2,3b) Zahnräder sind, wobei ein Zahnradring (2) am äußeren Umfang des Hohlwellenrotors (1) realisiert ist und ein korrespondierendes Zahnrad (3b) am äußeren Umfang des Rotors (3a) der Signalerzeugungsvorrichtung (3) realisiert ist, wobei die Zahnräder (2,3b) derart ausgebildet sind, dass sie formschlüssig ineinander greifen.

3. Hohlwellenmotor nach Anspruch 1, wobei die Verbindungsmittel (2,3b) Räder sind, wobei ein erstes Rad (2) am äußeren Umfang des Hohlwellenrotors (1) realisiert ist und wobei ein zweites Rad (3b) am äußeren Umfang des Rotors (3a) der Signalerzeugungsvorrichtung (3) realisiert ist, wobei die Räder (2,3b) derart ausgebildet sind, dass sie reibschlüssig aneinanderliegen.

4. Hohlwellenmotor nach einem der vorhergehenden Ansprüche, wobei sich zumindest ein Verbindungsmittel (2, 3b) derart axial entlang des Hohlwellenrotors (1) erstreckt, dass auch bei axialer Verschiebung der Hohlwelle (1) oder der Signalerzeugungsvorrichtung (3) ein Antrieb des Rotors (3a) der Signalerzeugungsvorrichtung (3) gewährleistet ist.

5. Hohlwellenmotor nach einem der vorhergehenden Ansprüche, wobei die Signalerzeugungsvorrichtung (3) mittels eines Trägers (3c) am Motorgehäuse (4) angeordnet ist.

6. Hohlwellenmotor nach einem der vorhergehenden Ansprüche, wobei der Träger (3c) eine steife oder eine federnde Ankopplung der Signal erzeugungsvorrichtung (3) am Motorgehäuse (4) ermöglicht.

7. Hohlwellenmotor nach einem der vorhergehenden Ansprüche, wobei die Verbindungsmittel (2,3b) aus Kunststoff oder Metall hergestellt sind, wobei vorzugsweise folgende Materialkombinationen für das erste (2) / zweite (3b) Verbindungsmittel realisiert sind: Bronze (2) /Stahl (3b) oder Messing (2) / Stahl (3b) oder Kunststoff (2) /Metall (3b) oder Stahl (2) / Bronze (3b) oder Stahl (2) / Messing (3b) oder Metall (2) / Kunststoff (3b).

8. Hohlwellenmotor nach einem der vorhergehenden Ansprüche, wobei die Signalerzeugungsvorrichtung (3) ein Inkremental-Drehgeber (3) ist, welcher eine Auflösung von bis zu 256 Impulsen pro Umdrehung aufweist.

9. Hohlwellenmotor nach Anspruch 8, wobei sich die Auflösung des Inkremental-Drehgebers (3) bei Betrieb der Anordnung um den Faktor d1/d2 erhöht, wobei d1 im wesentlichen dem Außendurchmesser des ersten Verbindungsmittels (2) und d2 im wesentlichen dem Außendurchmesser des zweiten Verbindungsmittels (3b) entspricht.

10. Hohlwellenmotor nach Anspruch 9, wobei der Faktor d1/d2 eine ganze Zahl ist.

11. Maschine, insbesondere Spritzgießmaschine, mit Hohlwellenmotor nach einem der vorhergehenden Ansprüche, wobei die Signalerzeugungsvorrichtung (3) am Gehäuse (4) des Hohlwellenmotors angeordnet ist.
